# EUROPEAN PATENT APPLICATION

(11) **EP 1 691 260 A1**
(43) Date of publication of application: **16.08.2006**
(21) Application number: 05101115.3
(22) Date of filing: 15.02.2005
(51) Int. Cl.: G06F 3/03, H04Q 7/32

(54) **Network Selection User Interface for Wireless Devices**

(71) Applicant: Research In Motion Limited, Waterloo, Ontario N2L 3W8 (CA)
(72) Inventor: Bocking, Andrew, N2K 3Y8, Waterloo, (CA); Lazaridis, Mihal, N2T 2K1, Waterloo, (CA); Naqvi, Noushad, N2K 4C1, Waterloo, (CA); Phipps, Darcy, N2V 2M8, Waterloo, (CA); Zinn, Ronald Scotte, N2L 5T9, Waterloo, (CA)
(74) Representative: Rickard, David John

(57) **Abstract**

A method for selecting a wireless network for a wireless device comprising: receiving a command from a user through a clickable thumbwheel and a graphical user interface ("GUI") presented on a display of the wireless device to scan for and identify available networks; displaying a choice of the available networks on the display; and, receiving a command from the user through the clickable thumbwheel and the GUI to switch operation of the wireless device from a current network to an available network in the choice of the available networks.

## Description

This invention relates to the field of wireless device network and carrier selection, and more specifically, to a graphical user interface for network and carrier selection for wireless devices.

Current wireless mobile communication devices comprise microprocessors, memory, soundcards, and run one or more software applications. Examples of software applications used in these wireless devices include micro-browsers, address books, email clients, and wavetable instruments. Additionally, wireless devices have access to a plurality of services via the Internet. A wireless device may, for example, be used to browse web sites on the Internet, to transmit and receive graphics, and to execute streaming audio and/or video applications. The transfer of Internet content to and from wireless device is typically facilitated by the Wireless Application Protocol ("WAP"), which integrates the Internet and other networks with wireless network platforms. Such wireless devices include, for example, the BlackBerry® handheld developed by Research In Motion Ltd. (RIM®).

Wireless devices communicate with each other and over wireless networks. Wireless networks are maintained by wireless carriers, service providers ("SPs"), value added resellers ("VARs"), and mobile virtual network operators ("MVNOs"). A wireless carrier or wireless network operator typically owns and operates a wireless network including radio equipment, base stations, antennae, interface equipment, servers, associated landlines, etc. A carrier also manages basic billing and other back-end services needed to sell wireless services to subscribers. The carrier may sell wireless services directly to subscribers in which case the carrier is also a SP. The carrier may also partner with a VAR, a form of SP who sells the carrier's services and may also provide certain additional services. In addition, the carrier may sell otherwise unused network capacity to one or more MVNOs. A MVNO is a SP that does not maintain its own wireless network (i.e., radio equipment). MVNOs may include large retailers, cable operators, and consumer goods companies with important brands. Unlike SPs and VARs, MVNOs offer their own unique content or marketing cachet to subscribers and often serve specific target markets or interests. MVNOs enable carriers to attract new market segments and thereby load their networks more fully. Carriers can devolve marketing, sales, billing, customer relations, and related front and back office functions to MVNOs who may provide these functions more efficiently for their target markets than can the carriers themselves. Thus, SPs, VARs, and MVNOs have similar and often overlapping roles.

Each wireless network maintained by a carrier can be based one of several different wireless standards or technologies including Code-Division Multiple Access ("CDMA"), General Packet Radio Service ("GPRS"), Mobitex, and Motorola's Integrated Digital Enhanced Network ("iDEN") and DataTAC^{™} networks. Furthermore, wireless devices can be configured to operate on one or more of these wireless networks.

However, one shortcoming of present wireless devices is that they do not allow users to effectively select between available carriers or networks in a given area. In particular, present carrier and network selection tools for wireless devices provide neither a user friendly interface nor the information required for users to make informed carrier or network selections.

A need therefore exists for an improved method and system for wireless device users to select from among available carriers and networks. Accordingly, a solution that addresses, at least in part, the above and other shortcomings is desired.

### SUMMARY

According to one aspect of the invention, there is provided a method for selecting a wireless network for a wireless device comprising: receiving a command from a user through a clickable thumbwheel and a graphical user interface ("GUI") presented on a display of the wireless device to scan for and identify available networks; displaying a choice of the available networks on the display; and, receiving a command from the user through the clickable thumbwheel and the GUI to switch operation of the wireless device from a current network to an available network in the choice of the available networks.

Preferably, the method further includes displaying a choice of modes for selecting the wireless network.

Preferably, the method further includes determining the choice of modes in response to a current network type.

Preferably, the method further includes receiving a command from the user through the clickable thumbwheel and the GUI to select a mode from the choice of modes.

Preferably, the choice of modes includes an automatic mode for automatically scanning for and identifying the available networks and for automatically selecting one of the available networks.

Preferably, the choice of the available networks are items in a menu.

Preferably, the menu has at least one icon to identify at least one of the current network, a home network, and a forbidden network.

Preferably, the GUI has a button for receiving the command to scan for and identify available networks.

Preferably, the GUI has a menu having a menu item for receiving the command from a user to switch operation of the wireless device from the current network to the available network.

Preferably, the menu has a menu item for adding the available network to a preferred network list.

Preferably, the menu has a menu item for displaying a preferred network list.

Preferably, the wireless device has a keyboard for selecting items in the GUI to generate commands.

Preferably, the keyboard is one of a QWERTY keyboard, a modified QWERTY keyboard, a Dvorak keyboard, and a predictive text keyboard.

Preferably, the wireless network is a wireless carrier.

In accordance with further aspects of the present invention there is provided an apparatus such as a wireless device, a method for adapting this device, a computer program product, as well as articles of manufacture such as a computer readable medium having program instructions recorded thereon for practising the method of the invention.

### BRIEF DESCRIPTION

Further features and advantages of the embodiments of the present invention will become apparent from the following detailed description, taken in combination with the appended drawings, in which:

FIG. 1 is a block diagram illustrating an exemplary wireless device adapted in accordance with an embodiment of the invention;

FIG. 2 is a block diagram illustrating a memory of the wireless device of FIG. 1. in accordance with an embodiment of the invention;

FIG. 3 is a front view illustrating the wireless device of FIG. 1 in accordance with an embodiment of the invention;

FIG. 4 is a screen capture illustrating a graphical user interface ("GUI") for selecting a network for a wireless device in accordance with an embodiment of the invention;

FIG. 5 is a screen capture illustrating the GUI of FIG. 4 with a pop-up menu for the automatic mode of network selection in accordance with an embodiment of the invention;

FIG. 6 is a screen capture illustrating the GUI of FIG. 4 with a pop-up menu for selecting between the automatic and manual modes of network selection in accordance with an embodiment of the invention;

FIG. 7 is a screen capture illustrating the GUI of FIG. 6 with a button for selecting to scan for available networks in accordance with an embodiment of the invention;

FIG. 8 is a screen capture illustrating the GUI of FIG. 7 with a menu (or list) of available networks in accordance with an embodiment of the invention;

FIG. 9 is a screen capture illustrating the GUI of FIG. 8 with a pop-up menu for the manual mode of network selection in accordance with an embodiment of the invention; and,

FIG. 10 is a flow chart illustrating operations of modules within a wireless device for selecting a wireless network in accordance with an embodiment of the invention.

It will be noted that throughout the appended drawings, like features are identified by like reference numerals.

### DETAILED DESCRIPTION

The following detailed description of the embodiments of the present invention does not limit the implementation of the invention to any particular computer programming language. The present invention may be implemented in any computer programming language provided that the operating system ("OS") provides the facilities that may support the requirements of the present invention. A preferred embodiment is implemented in the JAVA^{™} computer programming language (or other computer programming languages such as C or C++). (JAVA and all JAVA-based trademarks are the trademarks of Sun Microsystems Corporation.) Any limitations presented would be a result of a particular type of operating system or computer programming language and would not be a limitation of the present invention.

The present invention simplifies the selection of a network and/or carrier by providing a graphical user interface ("GUI") for wireless devices. The GUI provides a simplified set of choices and options to users to improve the network selection experience for them. As will be described in more detail below, the GUI includes both automatic and manual modes. In addition, the GUI presents useful information to users including the success of their network/carrier selection and the current state of coverage of available networks in the vicinity (e.g., where the wireless device is currently camped). A user may select from a list of available networks in the current area, presented by the GUI on the display of the user's wireless device, using an input device on the wireless device such as a thumbwheel and/or keyboard.

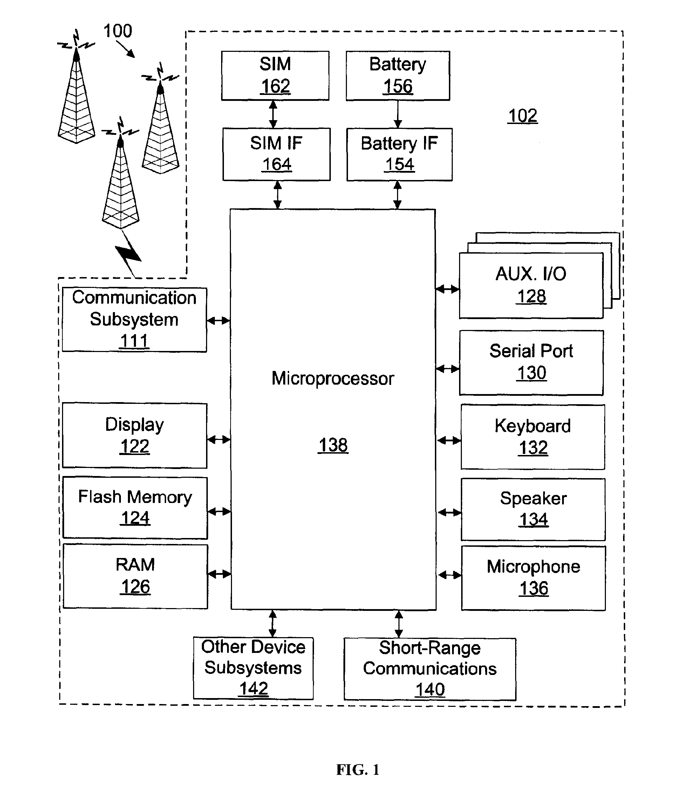

FIG. 1 is a block diagram illustrating an exemplary wireless device 102 and wireless network 100 adapted in accordance with an embodiment of the invention. Typically, the wireless device 102 is a handheld device 102. The wireless network 100 includes antenna, base stations, and supporting radio equipment, known to those of ordinary skill in the art, for supporting wireless communications between the wireless device 102 and other wireless devices and systems (not shown). The wireless network 100 may be coupled to a wireless network gateway (not shown) and to a wide area network (not shown) to which the other systems (not shown) may be coupled through appropriate interfaces (not shown).

The wireless device 102 is a two-way communication device having at least voice and advanced data communication capabilities, including the capability to communicate with other computer systems. Depending on the functionality provided by the device 102, it may be referred to as a data messaging device, a two-way pager, a cellular telephone with data messaging capabilities, a wireless Internet appliance, or a data communication device (with or without telephony capabilities). The device 102 may communicate with any one of a plurality of fixed transceiver stations 100 within its geographic coverage area.

The wireless device 102 will normally incorporate a communication subsystem 111, which includes a RF receiver, a RF transmitter, and associated components, such as one or more (preferably embedded or internal) antenna elements and, local oscillators ("LOs"), and a processing module such as a digital signal processor ("DSP") (all not shown). As will be apparent to those skilled in field of communications, particular design of the communication subsystem 111 depends on the communication network 100 in which the device 102 is intended to operate.

Network access is associated with a subscriber or user of the device 102 and therefore the device 102 requires a Subscriber Identity Module (or "SIM" card) 162 to be inserted in a SIM interface ("IF") 164 in order to operate in the network. The device 102 is a battery-powered device so it also includes a battery IF 154 for receiving one or more rechargeable batteries 156. Such a battery 156 provides electrical power to most if not all electrical circuitry in the device 102, and the battery IF 154 provides for a mechanical and electrical connection for it. The battery IF 154 is coupled to a regulator (not shown) which provides power to the circuitry of the device 102.

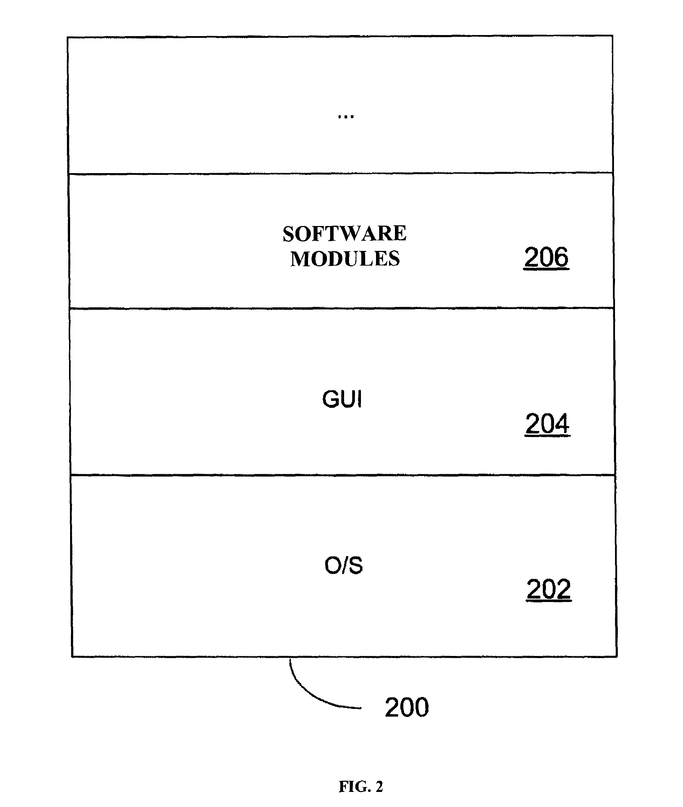

The wireless device 102 includes a microprocessor (or central processing system ("CPU")) 138 which controls overall operation of the device 102. Communication functions, including at least data and voice communications, are performed through the communication subsystem 111. The microprocessor 138 also interacts with additional device subsystems such as a display 122, a flash memory 124 or other persistent store, a random access memory ("RAM") 126, auxiliary input/output ("I/O") subsystems 128, a serial port 130, a keyboard 132, a speaker 134, a microphone 136, a short-range communications subsystem 140, and any other device subsystems generally designated at 142. Some of the subsystems shown in FIG. 2 perform communication-related functions, whereas other subsystems may provide "resident" or on-device functions. Notably, some subsystems, such as the keyboard 132 and display 122, for example, may be used for both communication-related functions, such as entering a text message for transmission over a communication network, and device-resident functions such as a calculator or task list. Operating system software used by the microprocessor 138 is preferably stored in a persistent store such as the flash memory 124, which may alternatively be a read-only memory ("ROM") or similar storage element (not shown). Those skilled in the art will appreciate that the operating system, specific device applications, or parts thereof, may be temporarily loaded into a volatile store such as RAM 126.

The microprocessor 138, in addition to its operating system functions, preferably enables execution of software applications on the device 102. A predetermined set of applications which control basic device operations, including at least data and voice communication applications, will normally be installed on the device 102 during its manufacture. A preferred application that may be loaded onto the device 102 may be a personal information manager ("PIM") application having the ability to organize and manage data items relating to the user such as, but not limited to, instant messaging ("IM"), email, calendar events, voice mails, appointments, and task items. Naturally, one or more memory stores are available on the device 102 and SIM 162 to facilitate storage of PIM data items and other information.

The PIM application preferably has the ability to send and receive data items via the wireless network 100. In a preferred embodiment, PIM data items are seamlessly integrated, synchronized, and updated via the wireless network 100, with the user's corresponding data items stored and/or associated with a host computer system (not shown) thereby creating a mirrored host computer on the device 102 with respect to such items. This is especially advantageous where the host computer system is the user's office computer system (not shown). Additional applications may also be loaded onto the device 102 through the network 100, an auxiliary I/O subsystem 128, serial port 130, short-range communications subsystem 140, or any other suitable subsystem 142, and installed by a user in RAM 126 or preferably in a non-volatile store (e.g., flash memory 124) for execution by the microprocessor 138. Such flexibility in application installation increases the functionality of the device 102 and may provide enhanced on-device functions, communication-related functions, or both. For example, secure communication applications may enable electronic commerce functions and other such financial transactions to be performed using the wireless device 102.

In a data communication mode, a received signal such as a text message, an email message, or web page download will be processed by the communication subsystem 111 and input to the microprocessor 138. The microprocessor 138 will preferably further process the signal for output to the display 122 and/or to the auxiliary I/O device 128. A user of the wireless device 102 may also compose data items, such as email messages, for example, using the keyboard 132 in conjunction with the display 122 and possibly the auxiliary I/O device 128. These composed items may be transmitted over a communication network 100 through the communication subsystem 111 or the short range communication subsystem 140.

The keyboard 132 is preferably a complete alphanumeric keyboard and/or telephone-type keypad. For example, according to one embodiment of the invention the keyboard 132 is a QWERTY keyboard including a full set of keys or buttons corresponding to those on a standard English computer keyboard or typewriter. Alternatively, the keyboard 132 may be a modified QWERTY keyboard including a modified arrangement or subset of the QWERTY keyboard. Alternatively, the keyboard 132 may be a Dvorak keyboard or modified Dvorak keyboard. Unlike a QWERTY keyboard, the Dvorak keyboard is designed so that the middle row of keys includes the most common letters. In addition, common letter combinations are positioned in such a way that they can be typed quickly.

According to another embodiment of the invention, the keyboard 132 may be a combination of a telephone style keypad and QWERTY style keyboard. For example, the keyboard 132 may have a 5x5 array of keys or buttons on which, unlike a traditional telephone layout that has letters overlaid on numbers in alphabetical order for text entry, the overlay for the keyboard may be in QWERTY order. Such a keyboard 132 is available on the 7100 series of BlackBerry® handhelds developed by Research In Motion Ltd.(RIM®). Advantageously, the keyboard 132 allows users to quickly and accurately dial or type either using single-handed operation or two-handed thumb-typing without the limitations associated with traditional telephone keypads. For example, the user need not learn a new way to type.

In addition, the keyboard 132 may be a predictive text keyboard having associated with it a predictive text software module 206 (e.g., SureType^{™} available from RIM®) that allows QWERTY style typing, using a built-in dictionary and set of rules, to select the correct letter based on context. To help facilitate easy spelling and composition, the predictive text software module 206 includes intuitive software with a word list (e.g., over 30,000 words) and the ability to increase that list based on the frequency of use and the names in the handheld's address book. It also has the ability to recognize character letter sequences that are common in the English language, such as "-ing". Advantageously, as the software 206 "understands" what a user is typing, the user can concentrate on composing his or her message rather than on the input method.

For voice communications, the overall operation of the wireless device 102 is substantially similar, except that the received signals would be output to the speaker 134 and signals for transmission would be generated by the microphone 136. Alternative voice or audio I/O subsystems, such as a voice message recording subsystem, may also be implemented on the device 102. Although voice or audio signal output is preferably accomplished primarily through the speaker 134, the display 122 may also be used to provide, for example, an indication of the identity of a calling party, duration of a voice call, or other voice call related information.

The serial port 130 shown in FIG. 2 is normally implemented in a personal digital assistant ("PDA")-type communication device for which synchronization with a user's desktop computer is a desirable, albeit optional, component. The serial port 130 enables a user to set preferences through an external device or software application and extends the capabilities of the device 102 by providing for information or software downloads to the device 102 other than through a wireless communication network 100. The alternate download path may, for example, be used to load an encryption key onto the device 102 through a direct and thus reliable and trusted connection to thereby provide secure device communication.

The short-range communications subsystem 140 shown in FIG. 1 is an additional optional component which provides for communication between the device 102 and different systems or devices (not shown), which need not necessarily be similar devices. For example, the subsystem 140 may include an infrared device and associated circuits and components, or a Bluetooth^{™} communication module to provide for communication with similarly-enabled systems and devices. Bluetooth^{™} is a registered trademark of Bluetooth SIG, Inc.

FIG. 2 is a block diagram illustrating a memory 200 of the wireless device 102 of FIG. 1 in accordance with an embodiment of the invention. The memory 200 has various software components for controlling the device 102 and may include flash memory 124, RAM 126, or ROM (not shown), for example. In accordance with an embodiment of the invention, the wireless device 102 is intended to be a multi-tasking wireless communications device configured for sending and receiving data items and for making and receiving voice calls. To provide a user-friendly environment to control the operation of the device 102, an operating system ("OS") 202 resident on the device 102 provides a basic set of operations for supporting various applications typically operable through a graphical user interface ("GUI") 204. For example, the OS 202 provides basic input/output system features to obtain input from the auxiliary I/O 128, keyboard 132, and the like, and for facilitating output to the user. In accordance with an embodiment of the invention, there are provided software modules 206 6 for selecting a wireless network or carrier as will be described below. Though not shown, one or more applications for managing communications or for providing personal digital assistant like functions may also be included.

Thus, the wireless device 102 includes computer executable programmed instructions for directing the device 102 to implement the embodiments of the present invention. The programmed instructions may be embodied in one or more software modules 206 resident in the memory 200 of the wireless device 102. Alternatively, the programmed instructions may be embodied on a computer readable medium (such as a CD disk or floppy disk) which may be used for transporting the programmed instructions to the memory 200 of the wireless device 102. Alternatively, the programmed instructions may be embedded in a computer-readable, signal-bearing medium that is uploaded to a network by a vendor or supplier of the programmed instructions, and this signal-bearing medium may be downloaded through an interface 111, 130, 140 to the wireless device 102 from the network by end users or potential buyers.

Referring again to FIG. 1, the SIM card 162 is a small, stamp-sized "smart card" that is used in a Global System for Mobile Communications ("GSM") wireless device 102. Typically, the SIM contains a microchip that stores data that identifies the wireless device 102 to a carrier or service provider. The SIM also stores data used to encrypt voice and data transmissions, phone book information, etc. Typically, the SIM can be removed from a first wireless device and placed in a second wireless device. This enables the second wireless device to use information such as the subscriber's telephone and account numbers. The interface between a SIM and the wireless device 102 within a wireless network 100 is defined in European Telecommunications Standards Institute ("ETSI") standard GSM 11.11 Version 6.2.0 Release 1997 ("Digital Cellular Telecommunications System (Phase 2+); Specification of the Subscriber Identity Module - Mobile Equipment (SIM - ME) Interface"), which is incorporated herein by reference. A carrier can be uniquely identified through the Mobile Country Code ("MCC") and Mobile Network Code ("MNC") assigned to the subscriber and stored in the International Mobile Subscriber Identity ("IMSI") file in the SIM of the subscriber's wireless device 102. The wireless network 100 can include Code-Division Multiple Access ("CDMA"), General Packet Radio Service ("GPRS"), Mobitex, and Motorola's Integrated Digital Enhanced Network ("iDEN") and DataTAC^{™} networks. Note, of course, that CDMA based networks do not employ SIMs.

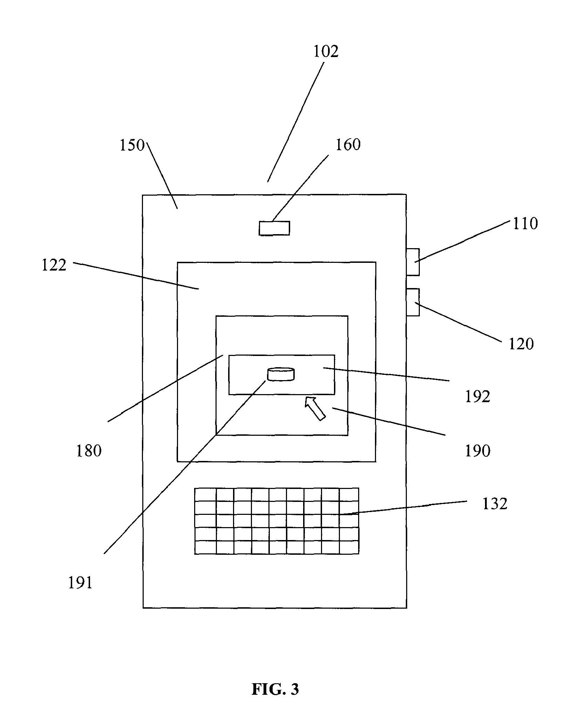

FIG. 3 is a front view illustrating the wireless device 102 of FIG. 1 in accordance with an embodiment of the invention. As mentioned above, the wireless device 102 can be a data and voice-enabled handheld device. The wireless device 102 includes a casing 150, a display screen 122, a graphical user interface ("GUI") 180, a keyboard (or keypad) 132, a thumbwheel (or trackwheel) 110, various select buttons 120, and various signal inputs/outputs 160 (e.g., power connector input, microphone, speaker, data interface input, etc.). Internally, the wireless device 102 includes one or more circuit boards, a CPU 138, memory 200, a battery 156, an antenna, etc. (not shown) which are coupled to the signal inputs/outputs 160, keyboard 132, display screen 122, etc.

The microprocessor 138 of the wireless device 102 is typically coupled to one or more devices 110, 120, 132 for receiving user commands or queries and for displaying the results of these commands or queries to the user on the display 122. For example, user queries may be transformed into a combination of SQL commands for producing one or more tables of output data which may be incorporated in one or more display pages for presentation to the user. The microprocessor 138 is coupled to memory 200 for containing software modules 206 and data such as base tables or virtual tables such as views or derived tables. As mentioned, the memory 200 may include a variety of storage devices typically arranged in a hierarchy of storage as understood to those skilled in the art.

A user may interact with the wireless device 102 and its software modules 206 using the graphical user interface ("GUI") 180. GUIs are supported by common operating systems and provide a display format which enables a user to choose commands, execute application programs, manage computer files, and perform other functions by selecting pictorial representations known as icons, or items from a menu through use of an input or pointing device such as a thumbwheel 110 and keyboard 132. In general, a GUI is used to convey information to and receive commands from users and generally includes a variety of GUI objects or controls, including icons, toolbars, drop-down menus, pop-up menus, text, dialog boxes, buttons, and the like. A user typically interacts with a GUI 180 presented on a display 122 by using an input or pointing device (e.g., a thumbwheel 110, a keyboard 132, etc.) to position a pointer or cursor 190 over an object 191 (i.e., "pointing" at the object) and by "clicking" on the object 191. (e.g., by depressing the thumbwheel 110, by depressing a button on the keyboard 132, etc.). This is often referred to as a point-and-click operation or a selection operation. Typically, the object 191 may be hi-lighted (e.g., shaded) when it is pointed at.

Typically, a GUI based system presents application, system status, and other information to the user in "windows" appearing on the display 122. A window 192 is a more or less rectangular area within the display 122 in which a user may view an application or a document. Such a window 192 may be open, closed, displayed full screen, reduced to an icon, increased or reduced in size, or moved to different areas of the display 122. Multiple windows may be displayed simultaneously, such as: windows included within other windows, windows overlapping other windows, or windows tiled within the display area.

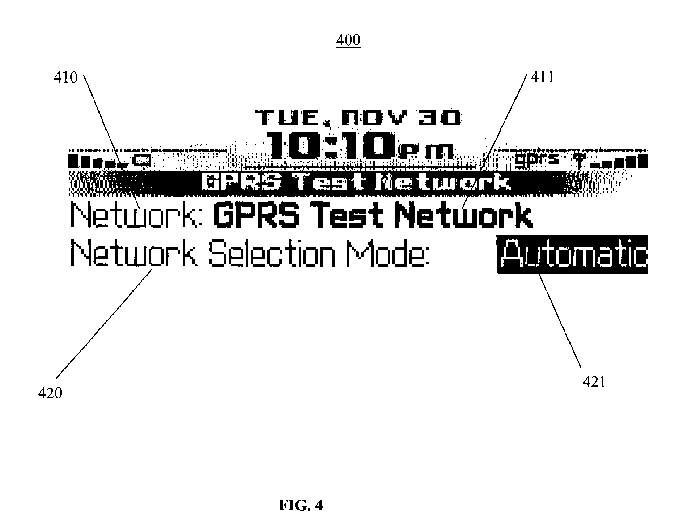

FIG. 4 is a screen capture illustrating a GUI 400 for selecting a network 100 for a wireless device 102 in accordance with an embodiment of the invention. The GUI 400 is presented to the user on the display 122 of the wireless device 102 upon selection by the user from a pull-down menu, pop-up menu, toolbar, etc., (not shown) of a network selection application. Selection of the network selection application by the user initiates GUI and software modules 206 within the memory 200 of the wireless device 102 to present the GUI 400 on the display 122. According to one embodiment of the invention, the GUI 400 is presented when the wireless device 102 is turned on or powered-up.

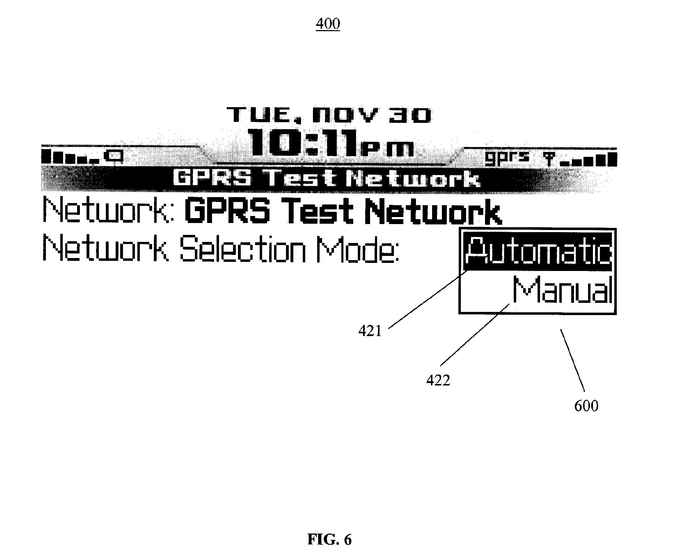

The GUI 400 includes the following icons and/or control elements: a network indicator 410 and a network selection mode indicator 420. The network indicator 410 is provided for displaying the name of the current network 411. In FIG. 4, the current network is named "GPRS Test Network" 411. The network selection mode indicator 420 is provided for displaying the current network selection mode. The GUI 400 allows for two modes of network selection: automatic 421 and manual 422 (see FIG. 6). In automatic mode 421, the software modules 206 control the wireless device 102 to scan for available networks in the current geographic region and to automatically select an available network from the available networks uncovered. In manual mode 422, the user is allowed to select from a menu of available networks in the current geographic area as uncovered by the wireless device 102 from its scanning. In FIG. 4, the current network selection node is "Automatic" 421.

The modes of network selection may be altered depending of the wireless network 100. For example, while automatic 421 and manual 422 modes may be made available for GPRS networks, as described above, alternate modes such as "Automatic" and "Home Only" may be made available for CDMA networks.

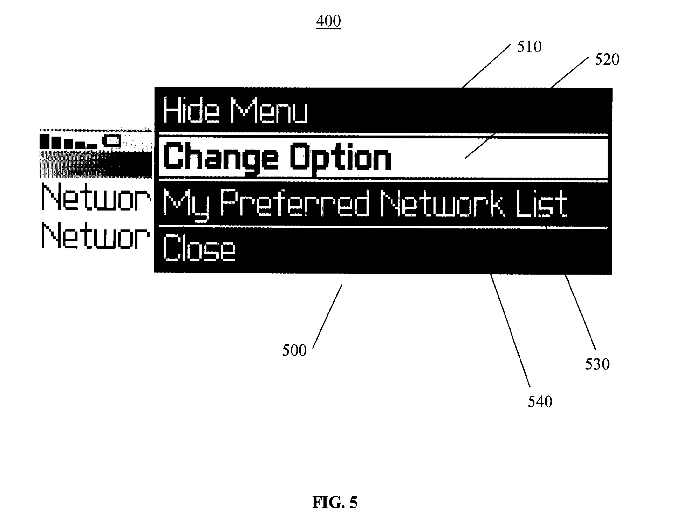

FIG. 5 is a screen capture illustrating the GUI 400 of FIG. 4 with a pop-up menu 500 for the automatic mode of network selection in accordance with an embodiment of the invention. The pop-up menu 500 is presented over the GUI 400 when the user points at the current network selection mode indicator 420, 421. (Note that the current network selection mode "Automatic" 421 is hi-lighted in FIG. 4).
Alternatively, the pop-up menu 500 is presented over the GUI 400 when the user points at a menu icon (not shown) on the display 122 or presses a menu key (not shown) on the keyboard 132 or on the wireless device (e.g., 120). The pop-up menu 500 presents the user with four options or menu items as follows: "Hide Menu" 510 for closing the pop-up window 500; "Change Option" 520 for allowing the user to change from the automatic mode to the manual mode (see below); "My Preferred Network List" 530 for presenting a list of networks previously saved by the user; and "Close" 540 for quitting from the network selection application and closing the GUI 400. A user may select a menu item from the pop-up menu 500 through a point and click operation. Typically, when an item in the pop-up menu 500 is pointed at, it is hi-lighted. For example, the "Change Option" 520 menu item is hi-lighted in FIG. 5.

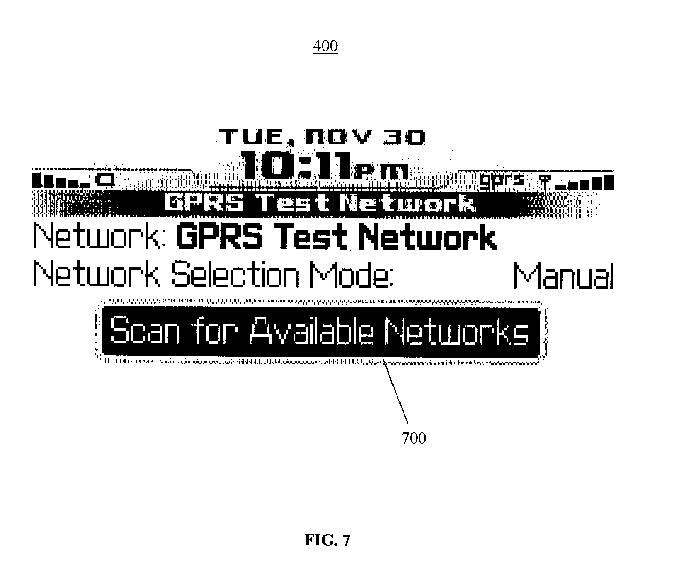

FIG. 6 is a screen capture illustrating the GUI 400 of FIG. 4 with a pop-up menu 600 for selecting between the automatic 421 and manual 422 modes of network selection in accordance with an embodiment of the invention. The pop-up menu 600 is presented over the GUI 400 when the user selects the "Change Option" 520 menu item shown in FIG. 5. The pop-up menu 600 includes menu items for selecting either the automatic mode 421 or the manual mode 422. If the user selects the automatic mode 421, the GUI 400 of FIG. 4 will be presented. If the user selects the manual mode 422, the GUI 400 of FIG. 7 will be presented.

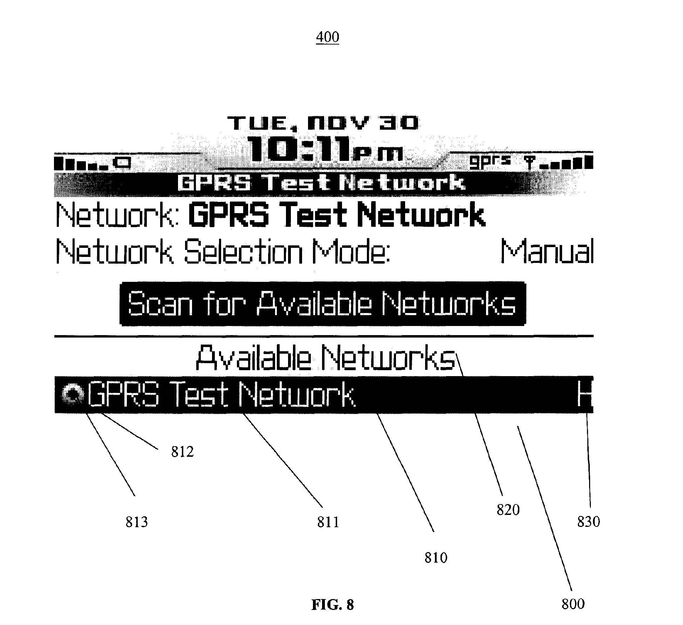

FIG. 7 is a screen capture illustrating the GUI 400 of FIG. 6 with a button 700 for selecting to scan for available networks in accordance with an embodiment of the invention. Thus, when a user selects the manual mode 422 of operation from the pop-up menu 600 shown in FIG. 6, the user is presented with a button 700 labelled "Scan for Available Networks" for initiating operations within the wireless device 102 to scan or search for available networks 100 in the area. The user may initiate this scanning by selecting the button 700 with the thumbwheel 110. When the button 700 is selected, the wireless device 102 scans for available networks in the area and presents a menu of available networks 800 found to the user on the display 122. To perform the scanning operation, the instruction received through the button 700 is used by the microprocessor 138 and/or communication subsystem 111 to initiate control of the RF receiver, LOs, and/or DSP to scan the appropriate frequencies to locate available networks. The available networks are then reported to the software modules 206 which compile the menu of available networks 800 for presentation to the user through the GUI 400 (see FIG. 8).

FIG. 8 is a screen capture illustrating the GUI 400 of FIG. 7 with a menu of available networks 800 in accordance with an embodiment of the invention. According to an alternate embodiment of the invention, the menu of available networks 800 is a list of available networks. The menu 800 may have a title such as "Available Networks" 820. The menu 800 lists one or more menu items 810 identifying available networks that were found by the scanning operation. In FIG. 8, one network was found and hence one menu item 810 appears in the menu 800. The menu item 810 for the network includes a text string 811 for naming the network. An exemplary name being "GPRS Test Network" 811. Each available network menu item 810 has an associated icon 812 for indicating whether that item 810 is the network that the wireless device 102 is currently operating on. In FIG. 8, this icon is a circle 812. The circle 812 has a filled-in centre 813 if the associated network 810, 811 is the current network.

In addition, each available network menu item 810 has an associated icon 830 for indicating a property of that item 810. In FIG. 8, this icon is the letter "H" 830 representing the expression "Home Network" and indicating that the item 810 is the home network for the wireless device 102. The icon 830 may be the letter "X" (not shown) for indicating that access to the network associated with item 810 is forbidden. Or, the icon 830 may not be presented or may be blank (not shown) for indicating that the associated item 810 is neither the home network nor a forbidden network.

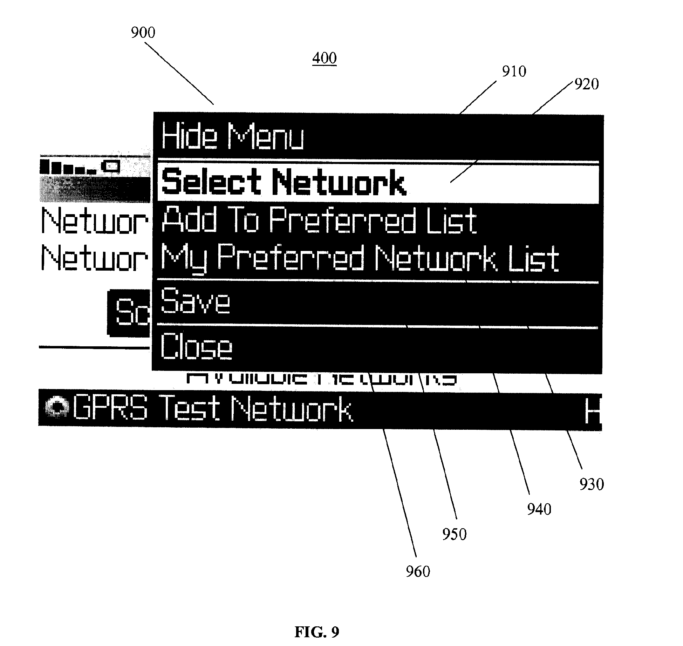

FIG. 9 is a screen capture illustrating the GUI 400 of FIG. 8 with a pop-up menu 900 for the manual mode of network selection in accordance with an embodiment of the invention. The pop-up menu 900 is presented over the GUI 400 when the user points at a selected available network item 810, 811 in the available network menu 800. (Note that the available network "GPRS Test Network" 810, 811 is hi-lighted in FIG. 8). Alternatively, the pop-up menu 900 is presented over the GUI 400 when the user points at a menu icon (not shown) on the display 122 or presses a menu key (not shown) on the keyboard 132 or on the wireless device (e.g., 120). The pop-up menu 900 presents the user with six options or menu items as follows: "Hide Menu" 910 for closing the pop-up window 900; "Select Network" 920 for allowing the user to change from a current network to the selected network 810, 811; "Add To Preferred List" 930 for adding the selected network 810, 811 to a list of networks maintained by the wireless device 102 in its memory 200; "My Preferred Network List" 940 for presenting a list of networks previously saved by the user; "Save" 950 for changing the network selection mode; and, "Close" 960 for quitting from the network selection application and closing the GUI 400. A user may select a menu item from the pop-up menu 900 through a point and click operation. Typically, when an item in the pop-up menu 900 is pointed at, it is hi-lighted. For example, the "Select Network" 920 menu item is hi-lighted in FIG. 9.

If the user selects the "My Preferred Network List" 940 (or 530 in FIG. 5) menu item, a list of previously saved networks is presented. The "My Preferred Network List" is a user supplied list of preferred networks to use when they are available. Selecting the "My Preferred Network List" item 530, 940 on the menu 500, 900 will pop up additional screens (not shown) to manage the preferred network list. The "Add to Preferred List" menu item 930 adds the desired network to the preferred network list but does not actually select that network for use. Networks may also be added to the preferred network list by other means not described here.

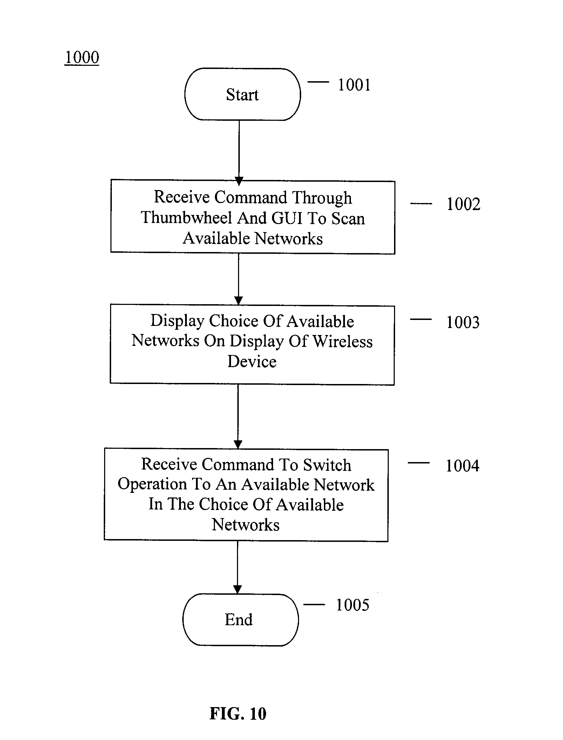

The above described method may be summarized with the aid of a flowchart. FIG. 10 is a flow chart illustrating operations 1000 of modules 206 within a wireless device 102 for selecting a wireless network 100 in accordance with an embodiment of the invention.

At step 1001, the operations 1000 start.

At step 1002, a command 700 is received from a user through a clickable thumbwheel 110 and a GUI 400 presented on a display 122 of the wireless device 192 to scan for and identify available networks 810, 811. Preferably, the wireless device 102 has a keyboard 132 for selecting items in the GUI 400 to generate commands. Preferably, the keyboard 132 is one of a QWERTY keyboard, a modified QWERTY keyboard, a Dvorak keyboard, and a predictive text keyboard. Preferably, the method further includes displaying a choice of modes 600 for selecting the wireless network 100.
Preferably, the method further includes determining the choice of modes 600 in response to a current network type (e.g., GPRS, CDMA, etc.). Preferably, the method further includes receiving a command from the user through the clickable thumbwheel 110 and the GUI 400 to select a mode 421, 422 from the choice of modes 600. Preferably, the choice of modes 600 includes an automatic mode 421 for automatically scanning for and identifying the available networks and for automatically selecting one of the available networks.

At step 1003, a choice of the available networks 800 is displayed on the display 122.

At step 1004, a command 920 is received from the user through the clickable thumbwheel 110 and the GUI 400 to switch operation of the wireless device 102 from a current network 812, 813 to an available network 810, 811 in the choice of the available networks 800. Preferably, the choice of the available networks 800 are items 810, 811 in a menu 800. Preferably, the menu 800 has at least one icon 812, 813, 830 to identify at least one of the current network, a home network, and a forbidden network. Preferably, the GUI 400 has a button 700 for receiving the command to scan for and identify available networks 800. Preferably, the GUI 400 has a menu 900 having a menu item 920 for receiving the command from a user to switch operation of the wireless device 102 from the current network 812, 813 to the available network 810, 811. Preferably, the menu 900 has a menu item 930 for adding the available network 810, 811 to a preferred network list. Preferably, the menu 900 has a menu item 940 for displaying a preferred network list. Preferably, the wireless network 100 is a wireless carrier.

At step 1005, the operations 1000 end.

While this invention is primarily discussed as a method, a person of ordinary skill in the art will understand that the apparatus discussed above with reference to a wireless device 102, may be programmed to enable the practice of the method of the invention. Moreover, an article of manufacture for use with a wireless device 102, such as a pre-recorded storage device or other similar computer readable medium including program instructions recorded thereon, may direct the wireless device 102 to facilitate the practice of the method of the invention. It is understood that such apparatus and articles of manufacture also come within the scope of the invention.

The embodiments of the invention described above are intended to be exemplary only. The scope of the invention is therefore intended to be limited solely by the scope of the appended claims.

## Claims

1. A method for selecting a wireless network for a wireless device comprising:
receiving a command from a user through a clickable thumbwheel and a graphical user interface ("GUI") presented on a display of the wireless device to scan for and identify available networks;
displaying a choice of the available networks on the display; and,
receiving a command from the user through the clickable thumbwheel and the GUI to switch operation of the wireless device from a current network to an available network in the choice of the available networks.

2. The method of claim 1 and further comprising displaying a choice of modes for selecting the wireless network.

3. The method of claim 2 and further comprising determining the choice of modes in response to a current network type.

4. The method of claim 2 or claim 3 and further comprising receiving a command from the user through the clickable thumbwheel and the GUI to select a mode from the choice of modes.

5. The method of any one of claims 2 to 4 wherein the choice of modes comprises an automatic mode for automatically scanning for and identifying the available networks and for automatically selecting one of the available networks.

6. The method of any one of claims 1 to 5 wherein the choice of the available networks are items in a menu.

7. The method of claim 6 wherein the menu has at least one icon to identify at least one of the current network, a home network, and a forbidden network.

8. The method of any one of claims 1 to 7 wherein the GUI has a button for receiving the command to scan for and identify available networks.

9. The method of any one of claims 1 to 8 wherein the GUI has a menu having a menu item for receiving the command from a user to switch operation of the wireless device from the current network to the available network.

10. The method of claim 9 wherein the menu has a menu item for adding the available network to a preferred network list.

11. The method of claim 9 or claim 10 wherein the menu has a menu item for displaying a preferred network list.

12. The method of any one of claims 1 to 11 wherein the wireless device has a keyboard for selecting items in the GUI to generate commands.

13. The method of claim 12 wherein the keyboard is one of a QWERTY keyboard, a modified QWERTY keyboard, a Dvorak keyboard, and a predictive text keyboard.

14. The method of any one of claims 1 to 13 wherein the wireless network is a wireless carrier.

15. A computer program product having a computer readable medium tangibly embodying computer executable code means for directing a wireless device to select a wireless network, the computer program product comprising:
code for implementing the method of any of claims 1 to 14.

16. A wireless device operable on a wireless network, comprising:
a processor coupled to memory and an interface to the wireless network and adapted for:
receiving a command from a user through a clickable thumbwheel and a graphical user interface ("GUI") presented on a display of the wireless device to scan for and identify available networks;
displaying a choice of the available networks on the display; and,
receiving a command from the user through the clickable thumbwheel and the GUI to switch operation of the wireless device from a current network to an available network in the choice of the available networks.

17. The wireless device of claim 16 wherein the processor is further adapted for displaying a choice of modes for selecting the wireless network.

18. The wireless device of claim 17 wherein the processor is further adapted for determining the choice of modes in response to a current network type.

19. A wireless communications system comprising at least one wireless device according to any of claims 16 to 18.

## Amended claims

### Amended claims in accordance with Rule 86(2) EPC.

**1.** A method for selecting a wireless network (100) for a wireless device (102) comprising:
determining a choice of modes for selecting the wireless network in response to a current network type for a current network and displaying the choice of modes on a display (122) of the wireless device;
receiving a command from a user through an input device (110) and a graphical user interface ("GUI") (180, 204, 400) presented on the display to select a mode from the choice of modes;
receiving a command from the user to scan for and identify available networks;
displaying a choice of the available networks on the display; and,
receiving a command from the user to switch operation of the wireless device from the current network to an available network in the choice of the available networks.

**2.** The method of claim 1 wherein the input device is a clickable thumbwheel (110).

**3.** The method of claim 1 or claim 2 wherein the choice of modes comprises an automatic mode (421) for automatically scanning for and identifying the available networks and for automatically selecting one of the available networks.

**4.** The method of any one of claims 1 to 3 wherein the choice of the available networks are items in a menu (500, 600, 800, 900).

**5.** The method of claim 4 wherein the menu has at least one icon to identify at least one of the current network (411), a home network (810), and a forbidden network.

**6.** The method of any one of claims 1 to 5 wherein the GUI has a button (700) for receiving the command to scan for and identify available networks.

**7.** The method of any one of claims 1 to 6 wherein the GUI has a menu (800) having a menu item for receiving the command from a user to switch operation of the wireless device from the current network (810, 811) to the available network (812, 813).

**8.** The method of claim 7 wherein the menu has a menu item for adding the available network to a preferred network list.

**9.** The method of claim 7 or claim 8 wherein the menu has a menu item for displaying a preferred network list.

**10.** The method of any one of claims 1 to 9 wherein the wireless device has a keyboard (132) for selecting items in the GUI to generate commands.

**11.** The method of claim 10 wherein the keyboard is one of a QWERTY keyboard, a modified QWERTY keyboard, a Dvorak keyboard, and a predictive text keyboard.

**12.** The method of any one of claims 1 to 11 wherein the wireless network is a wireless carrier.

**13.** A computer program product having a computer readable medium tangibly embodying computer executable code means (206) for directing a wireless device (102) to select a wireless network (100), the computer program product comprising: code for implementing the method of any of claims 1 to 12.

**14.** A wireless device (102) operable on a wireless network (100), comprising:
a processor (138) coupled to memory (124, 200) and an interface to the wireless network and adapted for:
determining a choice of modes for selecting the wireless network in response to a current network type for a current network and displaying the choice of modes on a display (122) of the wireless device;
receiving a command from a user through an input device (110) and a graphical user interface ("GUI") (180, 204, 400) presented on the display to select a mode from the choice of modes;
receiving a command from the user to scan for and identify available networks;
displaying a choice of the available networks on the display; and,
receiving a command from the user to switch operation of the wireless device from the current network to an available network in the choice of the available networks.

**15.** The wireless device of claim 14 wherein the input device is a clickable thumbwheel (110).

**16.** A wireless communications system (100) comprising a plurality of wireless devices (102) according to claim 14 or claim 15.
